# EUROPÄISCHE PATENTSCHRIFT

(11) **EP 2 905 101 B1**
(45) Veröffentlichungstag und Bekanntmachung des Hinweises auf die Patenterteilung: **03.11.2021**
(21) Anmeldenummer: 15000166.7
(22) Anmeldetag: 21.01.2015
(51) Int. Cl.: B23B 29/034, B24B 39/02

(54) **Schälwerkzeug**
Peeling tool
Outil de pelage

(30) Priorität: 05.02.2014 DE 102014202104
(43) Veröffentlichungstag der Anmeldung: 12.08.2015
(73) Patentinhaber: Ecoroll AG, Werkzeugtechnik, 29227 Celle (DE)
(72) Erfinder: Röttger, Karsten, 29223 Celle (DE)
(74) Vertreter: Plöger, Jan Manfred

(56) Entgegenhaltungen:
- EP-A1- 1 153 683
- EP-B1- 1 169 154
- EP-B1- 1 296 801
- EP-B1- 1 512 492
- DE-A1-102009 040 592
- US-A- 1 824 543
- US-A- 4 184 794
- US-A- 5 393 177
- US-B1- 6 254 319

## Beschreibung

Die Erfindung betrifft ein Schälwerkzeug gemäß dem Oberbegriff von Anspruch 1, das aus dem Dokument EP 1 512 492 B1 bekannt ist.

Derartige Schälwerkzeuge werden insbesondere bei der Herstellung von Hydraulikzylindern zum Schälen von Rohren auf ihrer Innenseite eingesetzt. Hydraulikzylinder müssen hohe Anforderungen hinsichtlich der Formabweichung erfüllen. So muss einerseits eine hohe Maßhaltigkeit erreicht werden, insbesondere werden eine hohe Maßhaltigkeit und ein geringer Kreisformfehler gefordert. Zudem soll das Werkzeug Geradheitsfehlern des Rohr-Rohlings folgen, wie sie insbesondere an gezogenen Präzisionsstahlrohren vorkommen. Diese Geradheitsfehler liegen bei 1 bis 2 Millimeter pro Meter Rohrlänge. Des Weiteren werden hohe Anforderungen an die Oberflächengüte gestellt.

Um diese Anforderungen am fertigen Hydraulikzylinder zu erreichen, werden in der Regel kalt gezogene Rohre als Rohlinge verwendet. Kalt gezogene Rohre sind jedoch aufwändig in der Fertigung, es wird daher versucht, diese durch warm gewalzte Rohre zu ersetzen. Warm gewalzte Rohre erreichen jedoch nicht deren Formgenauigkeit.

Aus der DE 198 45 948 A1 ist eine Gewindeschneidvorrichtung bekannt, bei der ein Schälwerkzeug vorhanden sein kann, das radial beweglich an einem Schälkopf gelagert ist. Nachteilig an einem derartigen Werkzeug ist, das warmgewalzte Rohre nicht oder nur sehr schlecht zu bearbeiten sind.

Aus der DE 26 44 292 C2 und der gattungsgemäßen EP 1 512 492 B1 sind kombinierte Schäl- und Glattwalzwerkzeuge bekannt, bei denen Schälmesser an einem Schälkopf befestigt sind, der relativ zum Werkzeugkopf axial beweglich sind. Nachteilig an einem derartigen System ist die häufig geringe Steifigkeit in radialer Richtung.

Ein Schälwerkzeug ist aus der DE 10 2009 040 592 A1 bekannt, das ein Schrupp- und ein Schälwerkzeug aufweist, die voneinander durch eine Kupplung getrennt sind, die einen Radialversatz zulässt. Nachteilig an einem derartigen Werkzeug ist, dass warmgewalzte Rohre nicht gut zu bearbeiten sind.

Der Erfindung liegt die Aufgabe zugrunde, auch bei geringer Maßhaltigkeit und starker Krümmung des Rohr-Rohlings eine hohe Maßhaltigkeit und gleichmäßige Oberflächengüte des bearbeiteten Werkstücks zu erreichen.

Die Erfindung löst das Problem durch ein Schälwerkzeug mit den Merkmalen von Anspruch 1.

Vorteilhaft an der Erfindung ist zudem, dass dieser Vorteil bei der Erreichung einer erhöhten Bauteilqualität nicht mit einer deutlich aufwändigen Konstruktion erkauft werden muss.

Im Rahmen der vorliegenden Beschreibung wird unter dem Werkzeugkopf insbesondere das Bauteil oder der Abschnitt des Schälwerkzeugs verstanden, das bzw. der beim Einsatz des Schälwerkzeugs an der Innenoberfläche des Werkstücks geführt ist. Der Werkzeugkopf ist vorzugsweise biegestarr. *Insbesondere ist der Werkzeugkopf dasjenige Bauteil oder derjenige Abschnitt, der im Drehmomentfluss vor dem Schälmesser angeordnet ist, in anderen Worten überträgt der Werkzeugkopf direkt oder indirekt ein Drehmoment auf das Schälmesser.*

Der *Messerhalter* ist *kippfest am Werkzeugkopf befestigt. In anderen Worten ist der Messerhalter s*o *befestigt, dass er relativ zum Werkzeugkopf keine signifikante Kippbewegung, sondern nur eine Bewegung in radialer Richtung ausführen kann.*

Unter dem Schälmesser wird insbesondere dasjenige Bauteil des Schälwerkzeugs verstanden, das im Betrieb des Schälwerkzeugs den Span abhebt. An den Schälmessern ist die Schneide ausgebildet, also derjenige Abschnitt des Schälmessers, der bei der Bearbeitung in Kontakt mit dem Werkstück kommt und den Span abhebt. Die Schneide könnte auch als Schneidkante bezeichnet werden.

Es ist möglich und stellt eine bevorzugte Ausführungsform dar, dass das Schälmesser als Schneideinsatz ausgebildet ist, der fest mit dem Messerhalter verbindbar verbunden ist. Insbesondere ist das Schälmesser in diesem Fall stoffschlüssig, reibschlüssig oder formschlüssig mit dem Messerhalter verbunden. Alternativ ist möglich und stellt eine bevorzugte Ausführungsform dar, dass das Schälmesser ein integraler Bestandteil des Messerhalters ist. Der Schneideinsatz ist bevorzugt aus beschichtetem oder unbeschichtetem Hartmetall, Cermet oder Schneidkeramik aufgebaut.

Unter dem Merkmal, dass das zumindest eine Schälmesser am Messerhalter fixiert ist, wird insbesondere verstanden, dass das Schälmesser so am Messerhalter befestigt ist, dass eine Relativbewegung zwischen der Schneide des Schälmessers und dem Messerhalter unterbunden ist. Es ist aber möglich und gemäß einer bevorzugten Ausführungsform vorgesehen, dass Gemäß der Erfindung umfasst das Schälwerkzeug genau drei Schälmesser, wobei eines der Schälmesser so am Messerhalter befestigt ist, dass seine Lage relativ zu den anderen Schälmessern veränderbar ist. Maßgeblich ist lediglich, dass die Schälmesser in einen Zustand bringbar sind, in dem sie alle relativ zum Messerhalter fixiert sind, so dass ein Umkreisdurchmesser auch bei einem Einwirken von zeitlich variierenden, an den Schälmessern anliegenden Passivkräften konstant ist.

Dass das zumindest eine Schälmesser und das zumindest eine Gegenkrafterzeugungselement am Messerhalter fixiert sind, bedeutet also, dass sich dann, wenn sich eine Schneidkante des Schälmessers um einen Versatzvektor radial einwärts, also auf die Längsachse des Schälwerkzeugs zu, bewegt, auch das Gegenkrafterzeugungselements um den gleichen Versatzvektor bewegt.

Vorzugsweise sind die drei Schälmesser und/oder das zumindest eine Gegenkrafterzeugungselement formschlüssig, kraftschlüssig oder stoffschlüssig am Messerhalter befestigt.

Der Umkreisdurchmesser ist der Durchmesser desjenigen Kreises, auf dem die Kontur erzeugenden Punkte der Schälmesser liegen. Der Umkreisdurchmesser entspricht in sehr guter Näherung dem Innendurchmesser des Zylinders, der mit dem Schälwerkzeug erzeugt wird. Etwaige Unterschiede zwischen dem Innendurchmesser des gefertigten Zylinders und dem Umkreisdurchmesser können sich aus der Rückfederung des Materials unmittelbar hinter der Schneide des Schälmessers ergeben.

Unter dem Gegenkrafterzeugungselement wird ein Element des Messerhalters verstanden, mittels dem beim Betrieb des Schälwerkzeugs eine Gegenkraft erzeugt wird, die der Passivkraft, die am Schälwerkzeug anliegt, entgegenwirkt.

Unter dem Merkmal, dass der Messerhalter relativ zum Werkzeugkopf in radialer Richtung beweglich gelagert ist, wird insbesondere verstanden, dass der Messerhalter eine vorgegebene Auslenkung aus einer zentrierten Lage ausführen kann und eine weitere Auslenkung unterbunden ist. Es ist möglich, dass der Messerhalter mittels zumindest eines federnden Elements relativ zum Werkzeugkopf befestigt ist. Das hat den Vorteil, dass beim Einbringen des Schälwerkzeugs in die Öffnung des Rohr-Rohlings eine Beschädigung einer Eintrittsstelle am Rohr-Rohling durch einen azentrisch rotierenden Messerhalter vermieden wird. Alternativ ist der Messerhalter mit Spiel am Werkzeugkopf gelagert. Das heißt, dass auf den Messerhalter keine mit zunehmender Auslenkung von der zentrierten Lage zunehmende Kraft wirkt.

Vorzugsweise ist der Messerhalter relativ zum Werkzeugkopf in axialer Richtung geführt. Insbesondere ist der Messerhalter am Werkzeugkopf in axialer Richtung geführt. Beispielsweise ist der Messerhalter an einem Messerkopf befestigt und der Messerkopf besitzt eine Gleitführung oder eine Wälzführung, die eine Bewegung des Messerhalters in axialer Richtung relativ zum Messerkopf unterbindet, aber eine Bewegung in radialer Richtung ermöglicht.

Vorteilhaft an einem derartigen Schälwerkzeug ist, dass auch bei nicht hoch maßhaltigen Rohlingen eine hohe Oberflächengüte erreicht werden kann. Zeigt der Rohling beispielweise einen Geradheitsfehler, so ändert sich die Spanungsdicke für jedes der Schälmesser unterschiedlich. Dadurch liegen an den Schälmessern unterschiedliche Passivkräfte an. Die resultierende Gesamtkraft auf den Messerhalter drückt die Schälmesser in eine neue Position, in der die Spanungsdicken und damit die Passivkräfte einander ähnlicher sind. Es ist auch möglich, dass das Schälwerkzeug zwei oder mehr Messerhalter aufweist. Diese Messerhalter sind vorzugsweise bezüglich einer Längsachse des Schälwerkzeugs hintereinander angeordnet.

Bei Schälwerkzeugen nach dem Stand der Technik muss zunächst eine Reibkraft überwunden werden, bis die Schälmesser in ihre neue Position gelangen können. Aufgrund des Überganges von Haften zu Gleiten kommt es zu einer abrupten Positionsänderung der Schälmesser, was der Oberflächengüte abträglich ist.

Bei einem derartigen Schälwerkzeug hingegen sind die Schälmesser am Messerhalter fixiert und in radialer Richtung relativ zum Werkzeuggrundkörper beweglich gelagert. Es fällt den Schälmessern daher leichter, beim Vorliegen eines Kreisformfehlers ihre Lage zu ändern. Ruckartige Lageänderungen werden vermieden. So kann eine erhöhte Oberflächengüte erzielt werden. Der oben geschilderte Mechanismus gilt für das Verhalten bei Kreisformfehlern analog.

Vorteilhaft an der Erfindung ist, dass auch bei Verwendung von Rohr-Rohlingen mit erhöhten Geradheitsfehlern von beispielsweise mehr als 2,5 Millimeter pro Meter Rohrlänge eine hohe Oberflächengüte der fertig bearbeiteten Rohr-Innenoberfläche erreichbar ist.

Besonders günstig ist es, wenn das Schälwerkzeug eine Drehmoment-Übertragungsvorrichtung aufweist, wobei die Drehmoment-Übertragungsvorrichtung den Werkzeugkopf und den Messerhalter in zumindest einer Drehrichtung drehmomentstarr verbindet. Die Drehmoment-Übertragungsvorrichtung kann beispielsweise eine KreuzscheibenKupplung aufweisen oder durch diese gebildet sein. Alternativ oder zusätzlich kann die Drehmoment-Übertragungsvorrichtung eine Klauenkupplung aufweisen.

Gemäß einer bevorzugten Ausführungsform umfasst das Gegenkrafterzeugungselement ein zweites Schälmesser. In diesem Fall ist es möglich und stellt eine bevorzugte Ausführungsform dar, dass das erste Schälmesser und das zumindest zweite Schälmesser fest miteinander verbunden sind, beispielsweise stoffschlüssig. Insbesondere sind das erste Schälmesser und das zumindest zweite Schälmesser einstückig, also fügestellenfrei, miteinander verbunden. So sind Rohr-Rohlinge mit kleinem Durchmesser bearbeitbar.

Gemäß der Erfindung umfasst das Schälwerkzeug ein drittes Schälmesser. Eine bevorzugte Ausführungsform darstellt, dass das zweite Schälmesser und das dritte Schälmesser fest miteinander verbunden sind, beispielsweise stoffschlüssig. Insbesondere sind das zweite Schälmesser und das dritte Schälmesser einstückig, also fügestellenfrei, miteinander verbunden. Es ist zudem möglich und stellt eine bevorzugte Ausführungsform dar, dass alle drei Schälmesser am Messerhalter ausgebildet sind und vorzugsweise stoffschlüssig oder einstückig miteinander verbunden sind.

Wenn das zweite Schälmesser und das dritte Schälmesser fest miteinander verbunden sind ist es günstig, wenn das erste Schälmesser in seiner Radialposition stufenlos verstellbar am Messerhalter befestigt ist, beispielsweise mittels eines Gewindetriebs und/oder eines Aktors, insbesondere eines Piezoaktors. Der Umkreisdurchmesser kann somit stufenlos verändert werden.

Zusätzlich besitzt das Schälwerkzeug zumindest eine Verstellvorrichtung mittels dem ein Umkreisdurchmesser, auf dem die Schneiden der Schälmesser liegen, stufenlos veränderbar ist. Die Verstellvorrichtung ist vorzugsweise am Messerhalter befestigt. So wird eine besonders hohe Einstellgenauigkeit erreicht. Besonders günstig ist sind drei Schälmesser. In diesem Fall ist es ausreichend, dass lediglich eines der Schälmesser relativ zum Messerhalter beweglich angeordnet ist. In diesem Fall kann durch Verändern der Lage lediglich eines der Schälmesser relativ zum Messerhalter und damit relativ zu den beiden anderen Schälmessern der Umkreisdurchmesser auf einfache Weise verändert werden.

Die Verstellvorrichtung ist zum motorischen Verändern des Umkreisdurchmessers ausgebildet. In anderen Worten umfasst die Verstellvorrichtung einen Aktor, der so angeordnet ist, dass durch Betätigung des Aktors der Umkreisdurchmesser veränderbar ist. Es ist dann möglich, die Innenfläche eines Werkstücks zu bearbeiten, indem das Werkzeug in das Werkstück hinein gefahren wird. Nach Ende der Bearbeitung kann dann durch Betätigen des Aktors der Umkreisdurchmesser verringert und das Schälwerkzeug zurückgezogen werden, ohne dass die fertig bearbeitete Innenoberfläche durch vorstehende Schälmesser beschädigt werden könnte.

Besonders günstig ist es, wenn die Schälmesser in äquidistanten Winkelschritten angeordnet sind. Auf diese Weise werden besonders hohe Oberflächengüten erreicht. Ist genau eines der Schälmesser relativ zum Messerhalter beweglich angeordnet, so ist es ausreichend, wenn zwei weitere Schälmesser symmetrisch bezüglich einer Ebene angeordnet sind, in der die Bewegung des Schälmessers stattfindet und die senkrecht zu der Ebene verläuft, in der die Schälmesser rotieren, also der Ebene, die parallel zur Längsachse des Schälwerkzeugs verläuft.

Es sei darauf hingewiesen, dass die Nummerierung der Schälmesser beliebig ist. Es ist in anderen Worten unbeachtlich, welches der Schälmesser als das erste Schälmesser betrachtet wird.

Alternativ oder zusätzlich ist die Verstellvorrichtung so ausgebildet, dass der Messhalter mittels des Aktors so elastisch verformbar ist, dass sich der Umkreisdurchmesser ändert. Insbesondere ist es möglich, dass die Verstellvorrichtung zwei oder mehr Aktoren aufweist, von denen der eine eines der Schälmesser in radialer Richtung bewegt und der andere Aktor den Messerhalter als Ganzes deformiert und damit den Umkreisdurchmesser verändert.

Besonders günstig ist es, wenn die Verstellvorrichtung zumindest einen Piezoantrieb umfasst. Es ist möglich und gemäß einer bevorzugten Ausführungsform vorgesehen, dass der Piezoantrieb einen Stapel aus Piezoelementen umfasst. Besonders günstig ist es, wenn der Aktor einen Hub von zumindest 500 µm hat. Piezoaktoren haben den Vorteil einer hohen Steifigkeit, so dass sie die Passivkraft, die auf das Schälmesser wirkt, aufnehmen können. Es ist zudem möglich, die Auslenkung des Piezoaktors durch Ermitteln seiner elektrischen Kapazität zu messen.

Gemäß einer bevorzugten Ausführungsform umfasst das Schälwerkzeug eine Durchmesser-Bestimmungsvorrichtung zum Bestimmen des Umkreisdurchmessers und/oder des Innendurchmessers des fertig bearbeiteten Rohrs. Beispielsweise umfasst die Durchmesser-Bestimmungsvorrichtung einen Tastkörper, der auf die Innenseite des Rohrs vorgespannt ist, so dass aus der Auslenkung des Tastkörpers der Innendurchmesser des Rohrs bestimmbar ist. Besitzt das Schälwerkzeug - wie gemäß der Erfindung vorgesehen - ein Glattwalzwerkzeug, so ist der Messort, an dem die Durchmesser-Bestimmungsvorrichtung den Innendurchmesser bestimmt, vorzugsweise bezüglich einer Vorschubrichtung hinter dem Glattwalzwerkzeug angeordnet.

Beispielsweise umfasst diese Durchmesser-Bestimmungsvorrichtung eine Vorrichtung, die ausgebildet ist zum Messen der elektrischen Kapazität des Piezoaktors, sofern ein Piezoaktor Teil der Verstellvorrichtung ist. Aus der elektrischen Kapazität des Piezoaktors wird dann dessen Auslenkung und daraus der Umkreisdurchmesser bestimmt. Das kann beispielsweise dadurch erfolgen, dass die Abhängigkeit der Auslenkung von der elektrischen Kapazität in Vorversuchen ermittelt und in einem Kennfeld abgelegt wird. Aus der gemessenen elektrischen Kapazität lässt sich dann durch Interpolation des Kennfeldes die Auslenkung bestimmen.

Alternativ oder zusätzlich umfasst die Durchmesser-Bestimmungsvorrichtung einen Maßstab, beispielsweise einen Glasmaßstab, der so relativ zum ersten Schälmesser angeordnet ist, dass die Position des Schälmessers relativ zum Maßstab ablesbar oder automatisch auslesbar ist. So besitzt die Verstellvorrichtung vorzugsweise eine Schraube, wobei die radiale Position des ersten Schälmessers durch Drehen der Schraube verändert werden kann. Das Schälmesser oder eine Aufnahme des Schälmessers bewegt sich bei der Veränderung der radialen Position des Schälmessers an dem Maßstab vorbei, so dass die Positionsänderung ausgelesen werden kann. Insbesondere weist der Maßstab eine Skala auf, wobei das Schälmesser oder dessen Halter eine Markierung, insbesondere eine zweite Skala, besitzt, so dass die Position des Schälmessers relativ zum Maßstab anhand der beiden Skalen bestimmt werden kann. Beispielsweise sind die beiden Skalen wie bei einem Messschieber angeordnet.

Wenn die Verstellvorrichtung zum Deformieren des Messerhalters ausgebildet ist, besitzt der Messerhalter vorzugsweise eine Kerbe oder eine sonstige Materialschwächung, die sich beim Deformieren öffnet. Die Durchmesser-Bestimmungsvorrichtung ist dann zum Messen der Größe der Ausnehmung ausgebildet, um so den Umkreisdurchmesser zu bestimmen.

Gemäß einer bevorzugten Ausführungsform besitzt das Schälwerkzeug eine Positionsregelung, die mit der Verstellvorrichtung und mit der Durchmesser-Bestimmungsvorrichtung verbunden ist und eingerichtet ist zum automatischen Regeln des Umkreisdurchmessers auf einen vorgebbaren Soll-Durchmesser. Auf diese Weise führt auch ein Verschleiß der Schneidmesser nicht dazu, dass die Maßhaltigkeit des gefertigten Zylinders abnimmt.

Gemäß einer bevorzugten Ausführungsform umfasst das Schälwerkzeug zumindest eine Feder, mittels der der Messerhalter auf eine zentrierte Position vorgespannt ist. Unter der zentrierten Position wird eine Position verstanden, in der der Mittelpunkt des Umkreises auf der Längsachse des Schälwerkzeugs oder zumindest dichter bei der Längsachse liegt, als er ohne die Feder liegen würde.

Bevorzugt besitzt das Schälwerkzeug einen Aufbohrkopf, der in Bearbeitungsrichtung vor den Schälmessern angeordnet ist. Günstig ist es, wenn der Aufbohrkopf mit dem Werkzeugkopf fest, insbesondere lösbar fest, verbunden ist. Auf diese Weise können auch Rohre mit größeren Zylinderform- und Geradheitsfehlern bearbeitet werden.

Im Folgenden wird die Erfindung anhand der beigefügten Zeichnungen näher erläutert. Dabei zeigt
- Figur 1: im rechten Teilbild einen Längsschnitt durch ein erfindungsgemäßes Schälwerkzeug und im linken Teilbild einen Querschnitt bezüglich der Linie A-A,
- Figur 2: eine Drehmoment-Übertragungsvorrichtung in Form einer Kreuzscheibenkupplung, die Teil des Schälwerkzeugs gemäß Figur 1 ist,
- Figur 3: eine schematische Ansicht der Funktion einer Positionsregelung des Schälwerkzeugs gemäß Figur 1,
- Figur 4: eine zweite Ausführungsform eines erfindungsgemäßen Schälwerkzeugs,
- Figur 5: eine dritte Ausführungsform eines erfindungsgemäßen Schälwerkzeugs und

- Figur 6: eine Ausführungsform eines Schälwerkzeugs, das nicht zur Erfindung gemäß den Ansprüchen gehört.

- Figur 7: zeigt eine dreidimensionale Ansicht eines erfindungsgemäßen SchälGlattwalzwerkzeugs.

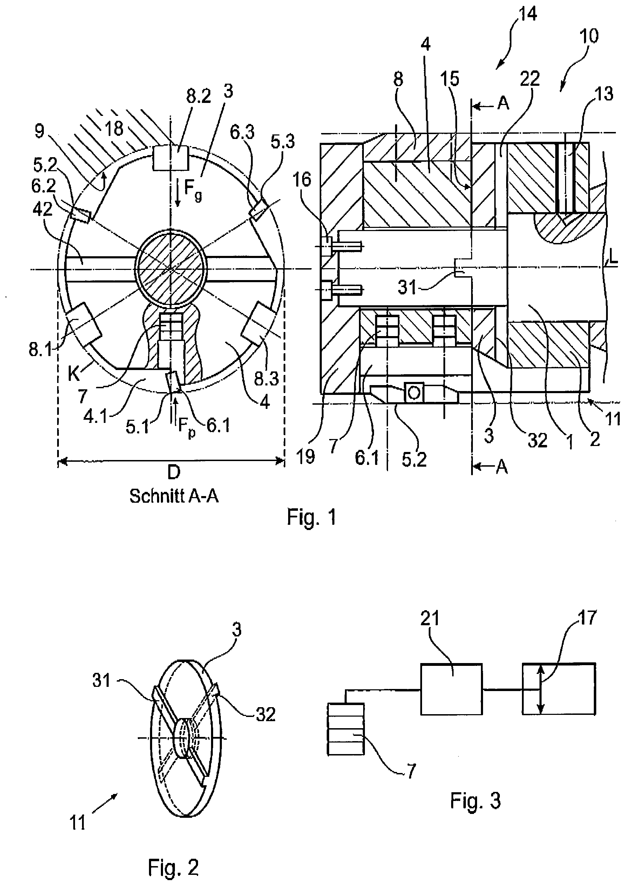

Figur 1 zeigt im rechten Teilbild einen Querschnitt durch ein erfindungsgemäßes Schälwerkzeug 10 in Form eines kombinierten Schäl-Glattwalzwerkzeugs, das einen Werkzeugkopf 1, der auch als Werkzeugkörper bezeichnet werden könnte, besitzt. Im linken Teilbild, das einen Schnitt entlang der Line A-A zeigt, ist zu sehen, dass das Schälwerkzeug 10 ein Schälmesser 6.1 aufweist. An dem Schälmesser 6.1 liegt beim Betrieb des Schälwerkzeugs 10 eine Passivkraft Fₚ an. Das Schälwerkzeug 10 hat zudem ein zweites Schälmesser 6.2 und ein drittes Schälmesser 6.3. Jedes Schälmesser 6 (Bezugszeichen ohne Zählsuffix bezeichnen jeweils alle Objekte der gleichen Art) besitzt eine Schneide 5. In anderen Worten besitzt das Schälmesser 6.1 eine Schneide 5.1, das Schälmesser 6.2 eine Schneide 5.2 und das Schälmesser 6.3 eine Schneide 5.3.

Das Schälwerkzeug 10 weist ein erstes Gegenkrafterzeugungselement in Form einer Führungsleiste 8.2 auf, die im Betrieb eine Gegenkraft F_{g} zur Passivkraft Fₚ erzeugt. Zudem wirken die Schälmesser 6.2 und 6.3 als Gegenkrafterzeugungselemente, die ebenfalls zum Erzeugen der Passivkraft Fₚ beitragen.

Das Schälwerkzeug 10 umfasst eine Drehmoment-Übertragungsvorrichtung 11, die im vorliegenden Fall eine Kreuzscheibenkupplung 3 und eine Kupplungsnabe 2 aufweist. Die Kupplungsnabe 2 ist mit dem Werkzeugkopf 1 über eine Schraube 13 verbunden. Das Schälwerkzeug 10 besitzt einen Messerhalter 4, der vorzugsweise scheibenförmig ist und daher auch als Schälscheibe bezeichnet werden kann. Die Drehmoment-Übertragungsvorrichtung 11 ist mit dem Messerhalter 4 drehmomentstarr gekoppelt. Am Messerhalter 4 sind die Schälmesser 6.1, 6.2, 6.3 befestigt.

Der Werkzeugkopf 1 besitzt eine Radialführung 14, die eine erste Führungsfläche 15, die an einem Führungskragen ausgebildet ist, und einen Führungsflansch 19 umfasst. Der Führungsflansch 19 ist mittels zumindest einer Schraube 16 befestigt. Die Radialführung 14 bewirkt, dass sich der Messerhalter 4 nur in radialer Richtung, das heißt senkrecht zu einer Längsachse L bewegen kann.

Das Schälwerkzeug 10 weist eine Verstellvorrichtung 7 auf, die im vorliegenden Fall einen Stapel aus Piezoelementen umfasst. Die Verstellvorrichtung 7 ist in der in Figur 1 gezeigten Ausführungsform so angeordnet, dass sie die Schneide 5.1 des Messers 6.1 nach radial außen und radial innen bewegen kann. Wird die Verstellvorrichtung 7 so betätigt, dass die Schneide 5.1 nach radial auswärts bewegt wird, so nimmt ein Umkreis-Durchmesser D zu. Der Umkreis-Durchmesser D ist der Durchmesser des Umkreises K, also desjenigen, eindeutig bestimmten Kreises, auf dem die Schneidkanten aller Schneiden 5 der Schälmesser 6 liegen.

Das linke Teilbild von Figur 1 zeigt, dass der Messerhalter 4 drei Führungselemente 8 in Form einer ersten Führungsleiste 8.1, einer zweiten Führungsleiste 8.2 und einer dritten Führungsleiste 8.3 aufweist. Diese Führungsleisten 8 stehen bei Verwendung des Schälwerkzeugs 10 in Kontakt mit einer Innenwand 9 eines zu bearbeitenden Werkstücks 18. Das erste Führungselement 8.1 ist Teil des Gegenkrafterzeugungselements.

Figur 2 zeigt eine perspektivische Ansicht der Kreuzscheibenkupplung 3. Es ist zu erkennen, dass die Kreuzscheibenkupplung 3 eine erste leistenartige Erhebung 31 aufweist, die dem Messerhalter 4 zugewandt ist. Um einen Winkel zwischen 70° und 110°, beispielsweise einen rechten Winkel, dazu versetzt besitzt die Kreuzscheibenkupplung 3 eine zweite Erhebung 32, die dem Messerhalter 4 abgewandt ist. Die erste Erhebung 31 greift in eine Nut 42 in dem Messerhalter 4 ein. Die zweite Erhebung 32 wirkt mit einer zweiten Nut 22 zusammen, die an der Kupplungsnabe 2 ausgebildet ist. Auf diese Weise ist eine drehomentstarre Verbindung zwischen dem Werkzeugkopf 1 und dem Messerhalter 4 hergestellt.

Figur 3 zeigt schematisch eine Positionsregelung 21. Bei der Positionsregelung 21 handelt es sich um eine Vorrichtung, die ausgebildet ist zum Regeln einer Auslenkung der Verstellvorrichtung 7 auf eine vorgegebene Soll-Auslenkung, die einem vorgegebenen Soll-Durchmesser D_{Soll} für den Umkreis-Durchmesser entspricht. Es ist zu erkennen, dass die Positionsregelung 21 einerseits mit dem der Verstellvorrichtung 7 elektrisch verbunden ist und andererseits mit einer Durchmesser-Bestimmungsvorrichtung 17.

Im vorliegenden Fall ist die Durchmesser-Bestimmungsvorrichtung 17 durch eine elektrische Schaltung gebildet, die an die Piezoelemente der Verstellvorrichtung 7 einen Wechselstrom anlegt, ausliest und die Phasenverschiebung zwischen Spannung und Strom misst. Daraus ermittelt sie die Kapazität der Piezoelemente und daraus wiederum die Auslenkung der Verstellvorrichtung 7. Die Positionsregelung 21 erfasst diese Auslenkung und vergleicht diese mit der Soll-Auslenkung und/oder berechnet aus der Auslenkung den Umkreis-Durchmesser und vergleicht diesen mit dem Soll-Durchmesser D_{Soll}. Weicht der ermittelte Ist-Wert D von dem vorgegebenen Soll-Wert D_{Soll} ab, so steuert die Positionsregelung 21 die Verstellvorrichtung 7 so an, dass sich der Betrag ID-D_{Soll}I der Differenz verringert, idealerweise auf null. Die elektrische Energie wird beispielsweise per Kabel und Schleifkontakten oder drahtlos per Induktion an die elektrische Schaltung übertragen.

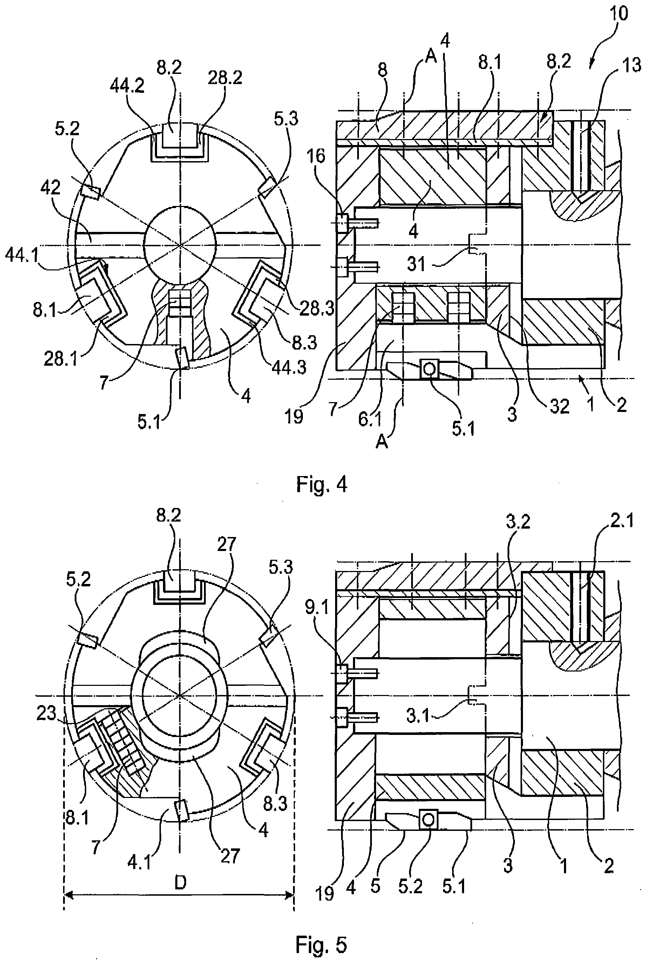

Figur 4 zeigt eine zweite Ausführungsform eines erfindungsgemäßen Schälwerkzeugs 10, bei der die Führungselemente 8.1, 8.2, 8.3 auf der Kupplungsnabe 2 und dem Führungsflansch 19 befestigt sind. Dazu sind die Führungselemente 8 mit jeweils einem Führungsleistenträger 28.1, 28.2 bzw. 28.3 und jeweils einer Schraube angeschraubt. Auf diese Weise sind die Führungselemente 8 mit dem Werkzeugkopf 1 fest verbunden. Die Nuten 44.1, 44.2, 44.3 ermöglichen eine Bewegung des Messerhalters 4 relativ zu den Führungselementen 8.

Figur 5 zeigt eine dritte Ausführungsform eines erfindungsgemäßen Schälwerkzeugs 10, dessen Messerhalter 4 einen Schlitz 23 aufweist, der den Messerhalter 4 über seine vollständige radiale Ausdehnung durchsetzt. Der Messerhalter 4 weist Ausnehmungen 27 auf, die so angeordnet sind, dass eine Nachgiebigkeit des Messerhalters 4 bezüglich einer von der Verstellvorrichtung 7 bewirkten Deformation größer ist als bezüglich einer Deformation in eine andere Richtung. Die Verstellvorrichtung 7, die in der vorliegenden Ausführungsform einen Piezoaktor umfasst, ist so angeordnet, dass sie den Schlitz 23 vergrößern und verkleinern kann, indem er eine elastische Verformung in Form einer Aufspreizung des Messerhalters 4 bewirkt. Je größer der Schlitz 23 ist, desto größer ist auch der Umkreis-Durchmesser D.

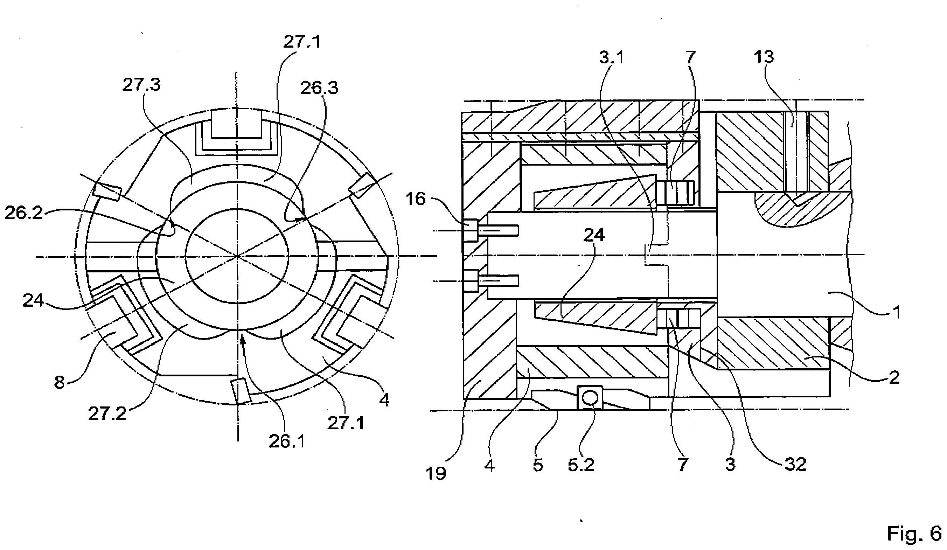

Figur 6 zeigt eine Ausführungsform eines Schälwerkzeugs 10, bei dem die Verstellvorrichtung 7 in axialer Richtung auf einen Konus 24 wirkt. Wird die Verstellvorrichtung 7 betätigt, so schiebt sie den Konus 24 gegen Kontaktflächen 26.1, 26.2, 26.3. Die Kontaktflächen 26 sind zwischen jeweils zwei Ausnehmungen 27.1, 27.2, 27.3 im Messerhalter 4 angeordnet. Bewegt sich der Konus 24 axial, so erhöht sich der Druck auf die Kontaktflächen 26, wodurch sich der Messerhalter 4 verformt. Die Kontaktflächen 26 sind unter jeweils den gleichen Winkeln angeordnet wie die Schälmesser 6, so dass durch diese Deformation die Schälmesser 6 nach radial außen gedrückt werden. Durch ein Betätigen der Verstellvorrichtung 7 wird dadurch der Umkreis-Durchmesser D erhöht.

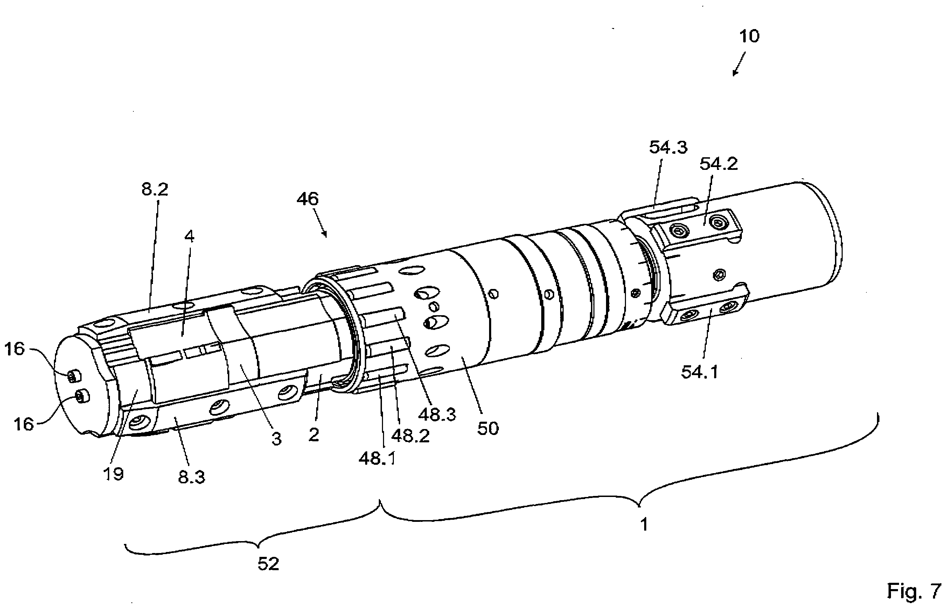

Figur 7 zeigt eine perspektivische, maßstäbliche Ansicht eines erfindungsgemäßen Schälwerkzeugs 10 gemäß einer weiteren Ausführungsform. Das Schälwerkzeug 10 umfasst ein Glattwalzwerkzeug 46, das biegestarr mit dem Werkzeugkopf 1 verbunden ist. Das Glattwalzwerkzeug 46 hat eine Mehrzahl an Walzkörpern 48.1, 48.2, ... , die in einem Käfig 50 mit radialem Spiel geführt sind. Der Käfig 50 ist in Umfangsrichtung drehbar am Werkzeugkopf 1 befestigt.

Der Messerhalter 4 ist an einem Messerkopf 52 radial verschieblich gelagert. Der Messerkopf 52 umfasst die Führungselemente 8 und ist starr mit dem Werkzeugkopf 1 verbunden. Es ist zu erkennen, dass der Werkzeugkopf 1 Führungsteile 54 besitzt, mittels derer er an einer fertig bearbeiteten Innenseite des Rohrs anliegt. Auf diese Weise ist der Werkzeugkopf 1 selbstzentrierend geführt.

### Bezugszeichenliste

| | | | |
|---|---|---|---|
| 1 | Werkzeugkopf | 31 | Erhebung |
| 2 | Kupplungsnabe | 32 | Erhebung |
| 3 | Kreuzscheibenkupplung | | |
| 4 | Messerhalter | 42 | Nut |
| 5 | Schneide | 44 | Nut |
| | | 46 | Glattwalzwerkzeug |
| 6 | Schälmesser | 48 | Walzkörper |
| 7 | Verstellvorrichtung, Antrieb | | |
| 8 | Führungselement | 50 | Käfig |
| 9 | Innenwand | 52 | Messerkopf |
| 10 | Schälwerkzeug | 54 | Führungsteil |
| 11 | Drehmoment-Übertragungsvorrichtung | L | Längsachse |
| 13 | Schraube | D | Umkreis-Durchmesser |
| 14 | Radialführung | K | Umkreis |
| 15 | Führungsfläche | Fₚ | Passivkraft |
| 16 | Schraube | F_{g} | Gegenkraft |
| 17 | Durchmesser-Bestimmungsvorrichtung | | |
| 19 | Führungsflansch | | |
| 21 | Positionsregelung | | |
| 22 | Nut | | |
| 23 | Schlitz | | |
| 24 | Konus | | |
| 26 | Kontaktfläche | | |
| 27 | Ausnehmung | | |
| 28 | Führungsleistenträger | | |

## Patentansprüche

1. Schälwerkzeug mit
(a) einem Werkzeugkopf (1),
(b) zumindest einem Schälmesser (6.1),
(c) zumindest einem Gegenkrafterzeugungselement (6.2, 6.3, 8.2), mittels dem eine Gegenkraft (F_{g}) zu einer am Schälmesser anliegenden Passivkraft (Fₚ) erzeugbar ist,
(d) einem Messerhalter (4), an dem das zumindest eine Schälmesser (6.1) und das zumindest eine Gegenkrafterzeugungselement (6.2, 6.3, 8.2) fixiert sind,
(e) wobei der Messerhalter (4) am Werkzeugkopf (1) relativ zum Werkzeugkopf (1) kippfest befestigt und in radialer Richtung beweglich gelagert ist, und
(f) einem Glattwalzwerkzeug (46),
**dadurch gekennzeichnet, dass**
(g) das Glattwalzwerkzeug (46) starr mit dem Werkzeugkopf (1) verbunden ist,
(h) der Messerhalter (4) genau drei Schälmesser (6.1, 6.2, 6.3) aufweist,
(i) das Schälwerkzeug zumindest eine Verstellvorrichtung (7), mittels der ein Umkreisdurchmesser (D), auf dem die Schneiden der Schälmesser (6) liegen, stufenlos einstellbar ist, aufweist,
(j) die Verstellvorrichtung (7) einen Antrieb zum motorischen Verändern des Umkreisdurchmessers (D) aufweist und
(k) die Verstellvorrichtung (7) so ausgebildet ist, dass genau ein Schälmesser (6.1) relativ zu dem Messerhalter (4) in radialer Richtung verfahrbar ist.

2. Schälwerkzeug nach Anspruch 1, **gekennzeichnet durch**
(a) eine Drehmoment-Übertragungsvorrichtung (11),
(b) wobei die Drehmoment-Übertragungsvorrichtung (11) den Werkzeugkopf (1) und den Messerhalter (4) in zumindest einer Drehrichtung drehmomentstarr verbindet.

3. Schälwerkzeug nach einem der vorstehenden Ansprüche, **gekennzeichnet durch** eine Aktiviervorrichtung, mittels der alle Schälmesser (6) kollektiv radial einwärts verfahrbar sind.

4. Schälwerkzeug nach einem der vorstehenden Ansprüche, **gekennzeichnet durch** eine Durchmesser-Bestimmungsvorrichtung (17) zum Bestimmen eines Umkreisdurchmessers (D).

5. Schälwerkzeug nach Anspruch 3 oder 4, **dadurch gekennzeichnet, dass** das Schälwerkzeug (10) eine Positionsregelung (21) besitzt, die
mit der Verstellvorrichtung (7) und mit der Durchmesser-Bestimmungsvorrichtung (17) verbunden ist und
eingerichtet ist zum automatischen Regeln des Umkreisdurchmessers (D) auf einen vorgebbaren Soll-Durchmesser.

6. Schälwerkzeug nach einem der vorstehenden Ansprüche, **gekennzeichnet durch** einen Aufbohrkopf, der starr mit dem Werkzeugkopf (1) verbunden ist.

## Claims

1. A skiving tool with
(a) a tool head (1),
(b) at least one skiving blade (6.1),
(c) at least one counterforce generation element (6.2, 6.3, 8.2), by means of which a counterforce (F_{g}) to a passive force (Fₚ) acting on the skiving blade can be generated,
(d) a blade holder (4) to which the at least one skiving blade (6.1) and the at least one counterforce generation element (6.2, 6.3, 8.2) are fixed,
(e) wherein the blade holder (4) is mounted on the tool head (1) such that it is fixed in a tilt-resistant manner relative to the tool head (1) and can be moved in the radial direction, and
(f) a roller burnishing tool (46),
**characterised in that**
(g) the roller burnishing tool (46) is connected to the tool head (1) such that it is resistant to bending,
(h) the blade holder (4) has precisely three skiving blades (6.1, 6.2, 6.3),
(i) the skiving tool has at least one adjustment device (7), by means of which a circular diameter (D), on which the cutting edges of the skiving blade (6) lie, can be infinitely adjusted,
(j) the adjustment device (7) comprises a drive for changing the circular diameter (D) by means of a motor, and
(k) the adjustment device (7) is designed in such a way that precisely one skiving blade (6.1) can be moved relative to the blade holder (4) in the radial direction.

2. The skiving tool according to claim 1, **characterised by**
(a) a torque transmission device (11),
(b) wherein the torque transmission device (11) connects the tool head (1) and the blade holder (4) in a torque-proof manner in at least one direction of rotation.

3. The skiving tool according to one of the preceding claims, **characterised by** an activation device, by means of which all skiving blades (6) can be collectively moved radially inwards.

4. The skiving tool according to one of the preceding claims, **characterised by** a diameter determination device (17) for determining a circumscribed circle diameter (D).

5. The skiving tool according to claim 3 or 4, **characterised in that** the skiving tool (1) features a position control (21) that
is connected to the adjustment device (7) and the diameter determination device (17), and
is configured to automatically regulate the circumscribed circle diameter (D) to a predeterminable target diameter.

6. The skiving tool according to one of the preceding claims, **characterised by** a drill head that is rigidly connected to the tool head (1).

## Revendications

1. Outil d'alésage, comportant
(a) une tête d'outil (1),
(b) au moins un couteau d'alésage (6.1),
(c) au moins un élément générateur de force antagoniste (6.2, 6.3, 8.2) permettant de générer une force antagoniste (Fg) par rapport à une force passive (Fp) appliquée au couteau d'alésage, et
(d) un porte-couteau (4) auquel sont fixés ledit au moins un couteau d'alésage (6.1) et ledit au moins un élément générateur de force antagoniste (6.2, 6.3, 8.2),
(e) le porte-couteau (4) étant fixé à la tête d'outil (1) de manière à ne pas pouvoir basculer par rapport à la tête d'outil (1) et étant monté de manière à pouvoir se déplacer dans la direction radiale, et
(f) un outil de brunissage (46),
**caractérisé en ce que**
(g) l'outil de brunissage (46) est relié rigidement à la tête d'outil (1),
(h) le porte-couteau (4) comprend précisément trois couteaux d'alésage (6.1, 6.2, 6.3),
(i) l'outil d'alésage comprend au moins un dispositif de réglage (7) permettant de régler en continu un diamètre de cercle circonscrit (D) sur lequel se situent les tranchants des couteaux d'alésage (6),
(j) le dispositif de réglage (7) comprend un entraînement pour modifier par voie motrice le diamètre de cercle circonscrit (D), et
(k) le dispositif de réglage (7) est réalisé de telle sorte que précisément un couteau d'alésage (6.1) peut être déplacé en direction radiale par rapport au porte-couteau (4).

2. Outil d'alésage selon la revendication 1, **caractérisé par**
(a) un dispositif de transmission de couple (11),
(b) le dispositif de transmission de couple (11) reliant la tête d'outil (1) et le porte-couteau (4) solidairement en rotation dans au moins un sens de rotation.

3. Outil d'alésage selon l'une des revendications précédentes, **caractérisé par** un dispositif d'activation permettant de déplacer tous les couteaux d'alésage (6) collectivement radialement vers l'intérieur.

4. Outil d'alésage selon l'une des revendications précédentes, **caractérisé par** un dispositif de détermination de diamètre (17) pour déterminer un diamètre de cercle circonscrit (D).

5. Outil d'alésage selon la revendication 3 ou 4, **caractérisé en ce que** l'outil d'alésage (10) possède une régulation de position (21) qui
est reliée au dispositif de réglage (7) et au dispositif de détermination de diamètre (17) et qui
est conçue pour une régulation automatique du diamètre de cercle circonscrit (D) à un diamètre de consigne prédéterminé.

6. Outil d'alésage selon l'une des revendications précédentes, **caractérisé par** une tête de perçage reliée solidairement à la tête d'outil (1).
